# EUROPEAN PATENT SPECIFICATION

(11) **EP 2 040 906 B1**
(45) Date of publication and mention of the grant of the patent: **04.03.2015**
(21) Application number: 07719875.2
(22) Date of filing: 31.05.2007
(51) Int. Cl.: B29C 49/64, B29C 45/72, B29C 45/78, B29C 49/78

(54) **A METHOD AND APPARATUS FOR POST-MOLD COOLING A MOLDED ARTICLE**
VERFAHREN UND VORRICHTUNG ZUM KÜHLEN EINES FORMKÖRPERS NACH DEM FORMEN
PROCEDE ET APPAREIL POUR LE REFROIDISSEMENT POST-MOULAGE D'UN ARTICLE MOULE

(30) Priority: 12.06.2006 US 450990
(43) Date of publication of application: 01.04.2009
(60) Divisional application: 14195561.7
(73) Proprietor: Husky Injection Molding Systems Ltd., Bolton, ON L7E 5S5 (CA)
(72) Inventor: NIEWELS, Joachim Johannes, Thornton, Ontario L0L 2N0 (CA)
(74) Representative: Vossius, Corinna
(86) International application number: PCT/CA2007/000956
(87) International publication number: WO 2007/143815

(56) References cited:
- EP-A- 0 990 966
- US-A- 3 488 801
- US-A- 5 176 858
- US-A1- 2005 040 560
- US-B1- 6 391 244
- US-B1- 6 746 643
- US-B2- 6 558 598

## Description

### TECHNICAL FIELD

The present invention generally relates to, but is not limited to a method, molding machine, and computer-readable product for post-mold cooling a molded article, comprising balancing cooling rates between portions of the molded article to substantially reduce post-mold cooling related defects of the molded article, amongst other things.

### BACKGROUND

Some injection molded articles, for example plastic preforms of the variety that are for blow molding into beverage bottles, require extended cooling periods to solidify into substantially defect-free molded articles. To the extent that the cooling of the molded article can be effected outside of the injection mold by one or more post-mold devices then the productivity of the injection mold may be increased (i.e. lower cycle time). A variety of such post-mold devices, and related methods, are known and have proven effective at the optimization of the injection molding machine cycle time.

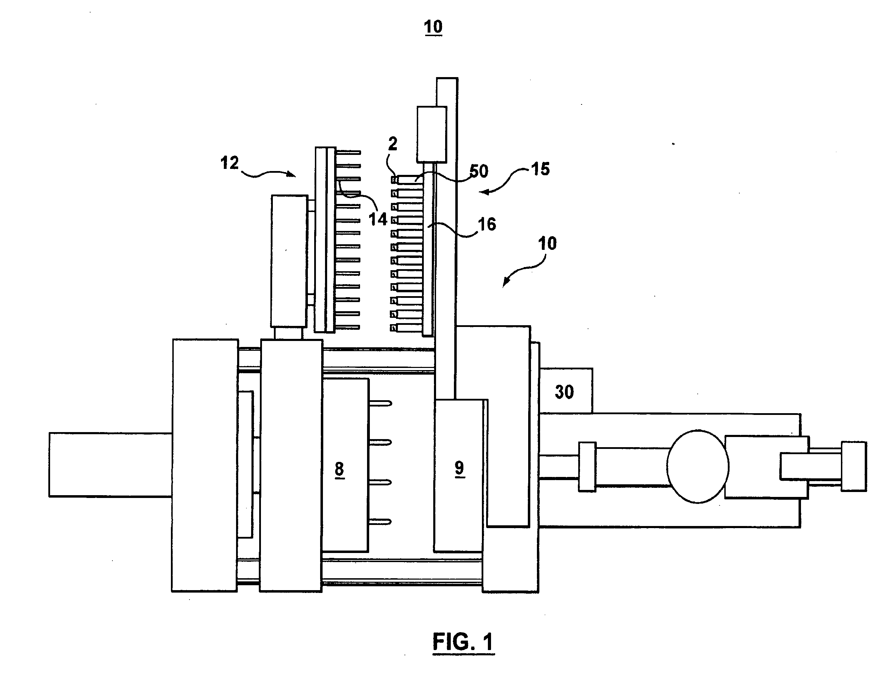

In a typical injection molding system, such as the system 10 depicted with reference to FIG. 1, and as generally described in commonly assigned United States patent 6,171,541 (Inventor: NETER, Witold, et al.; Published: 9th January, 2001), just-molded, and hence partially cooled, molded articles 2 are ejected from the mold half 8, when the mold halves 8, 9 are spaced apart, and into holders 50 (i.e. commonly known as a cooling holder, a take-off holder, or a cooling pipe, amongst others). The holders 50 are arranged on a post-mold device 15 (i.e. commonly known as an end-of-arm-tool, carrier plate assembly, removal device, post-cooling apparatus, amongst others), the post-mold device 15 configured to cyclically position the holders 50, arranged on a supporting plate 16, between an in-mold position between the mold halves 8, 9, to receive the molded articles 2, and an out-board position, as depicted, to allow the mold halves 8, 9 to close and begin another molding cycle. The construction and operation of the post-mold device 15, including those having multiple-positions, is generally described in commonly assigned United States patent RE33,237 (Inventor: DEFLER, Frank; Published: 19th June, 1990). Preferably, the molded articles 2 are held in the holders 50 until the molded articles 2 have cooled sufficiently that they may be ejected without risk of further deformation. The injection molding machine includes a controller 30, such as that described in commonly assigned United States patent 6,275,741 (Inventor: CHOI, Christopher; Published: 14th August, 2001), for controlling machine-control functions.

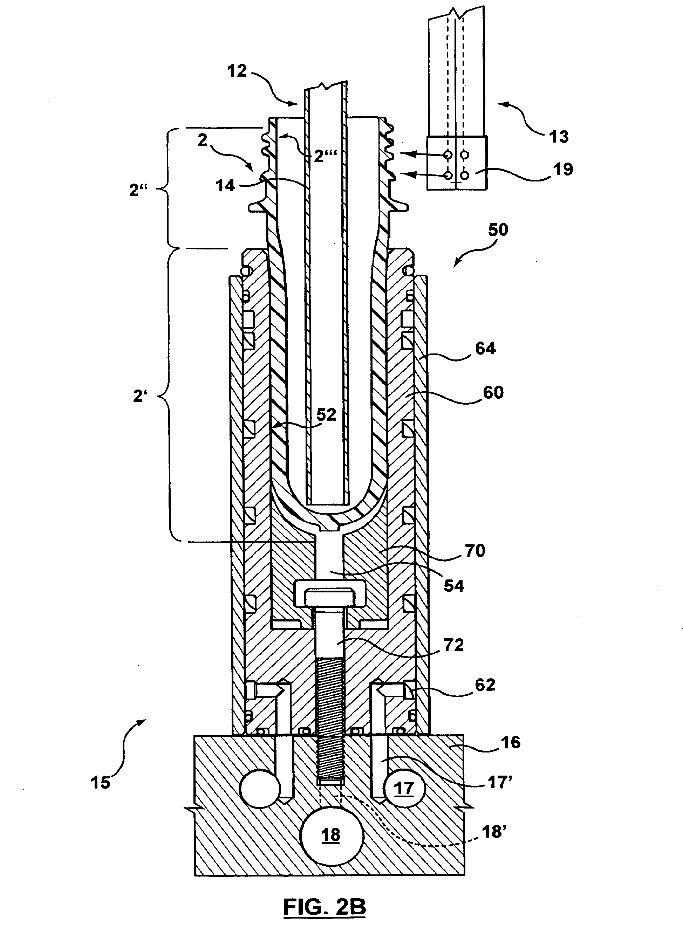

The cooling of the molded articles 2 may be assisted by the use of pins 14 for expelling a cooling fluid onto an inner portion of the molded articles 2, as shown with further reference to FIG. 2B. The pins 14 are arranged on another post-mold device 12 (i.e. commonly known as a COOLJET, a trademark of Husky Injection Molding Systems Ltd.), the post-mold device 12 arranged to be cyclically positioned between a cooling position, with the pins 14 positioned adjacent the portion of the molded articles 2, and an out-board position, as depicted. It is also known to use the molded article post-mold device 12 to extract the molded articles 2 from the holders 50 for a re-handling thereof, for instance, to a conveyor.

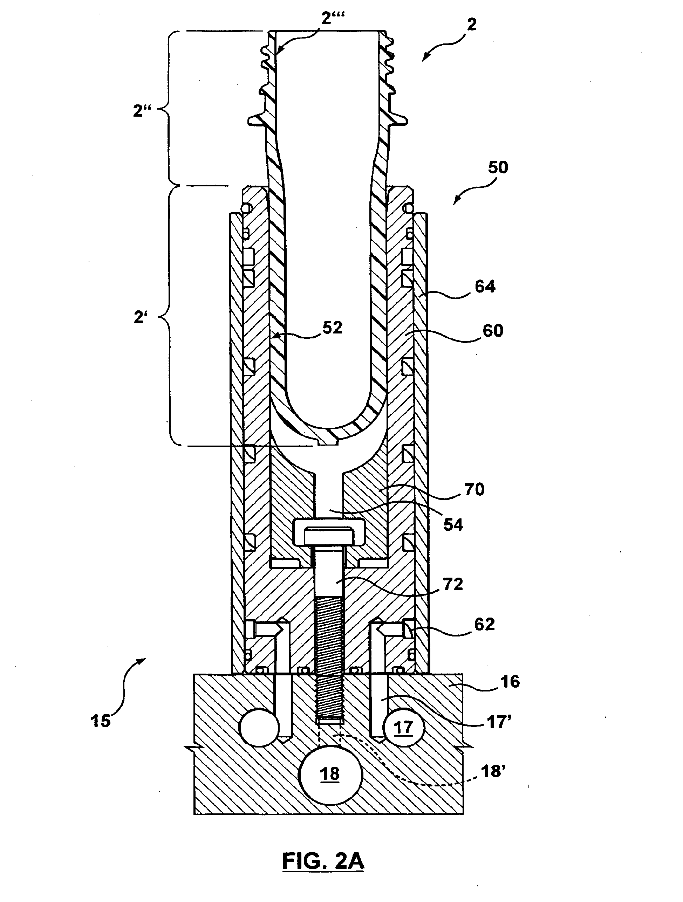

A portion of the post-mold device 15 depicting a holder 50 arranged on the supporting plate 16 is shown with reference to FIGS. 2A and 2B. The holder 50 is configured in accordance with the general teachings of commonly assigned United States patent 4,729,732 (Inventor: SCHAD, et al.; Published: 4th March, 1988). In particular, the holder 50 includes a tapered surface 52 defining a cavity for receiving a portion of the molded article 2, the surface 52 being smaller than the heated molded article. The holder includes a cooling structure operative to shrink the molded article, upon cooling, with the molded article sliding inside the cavity to fit snugly therein. The holder 50 further includes a suction structure adjacent a closed end of the cavity for maintaining the molded article in the holder 50.

As shown with reference to FIG. 2B, the cooling of the molded articles 2 may be assisted by the use of a coolant dispersion device 19 of a post-mold device 13 for dispersion of a coolant, such as cool air, around an exposed outer portion of the molded article; as generally described in commonly assigned United States patent 6,802,705 (Inventor: BRAND, Tiemo, et al.; Published: 12th October, 2004).

FIG. 2A depicts an initial position of the molded article 2 in the holder 50 immediately after having been received from the mold.

FIG. 2B depicts a completely seated position of the molded article 2 in the holder 50 after cooling, and related shrinkage, of the molded article 2.

The holder 50 comprises a holder 60 and an insert 70. The insert 70 is arranged in the holder 60 to provide the closed end of the cavity. The suction structure comprises a pressure channel 54 that extends through the insert 70, the channel 54 is connectable to an air pressure source 18, provided in a plate 16 of the post-mold device 15, via a pressure channel 18' configured in the holder 60. Likewise, the cooling structure comprises a coolant channel 62 configured around the holder 60, and enclosed by a holder sleeve 64, the coolant channel 62 connectable to a coolant source 17, provided in the plate 16, via a coolant channel 17' in the plate 16. The holder 60 and the insert 70 are held on the plate 16 by a fastener 72.

The coolant source 17 in the plate 16 is typically directly connected to a plant-wide coolant source. Typical plant-wide coolant sources include a chiller or a cooling tower to remove the heat added to the coolant from the molded article in the holder. Presently, faced with the problem of improving the efficiency of a molding cycle the common general knowledge in the molding art is to remove heat from the molded article holder as quickly as possible. The coolant, typically water, is preferably cooled to a temperature in the range of 6-10°C. In some high humidity molding environments the coolant may be kept warmer to avoid unwanted water condensation on the holder 50.

As can be seen with reference to FIGS. 2A and 2B, a first portion of the molded article 2' that is received in the cooled holder 50 will be cooled, by the holder 50, at a first rate while a second portion of the molded article 2" that is outside of the holder 50 will be cooled at a second rate. Under certain circumstances the second portion of the molded article 2" can take longer to cool than the first portion of the molded article 2'. The relative cooling between the first and second portions of the molded article 2', 2" may be affected by one or more variables such as the distribution of plastic in the molded article 2, the thermal profile of the molded article when ejected from the mold 8, 9, the relative first and second rates of cooling, amongst others. Whenever the time required for post-mold cooling the second portion of the molded article 2" is the limiting factor there is the risk that the first portion of the molded article 2' may become over-cooled. An over-cooled first portion of the molded article 2' is prone to deform.

Problems associated with cooling molded articles in the holder 50 may include localized sink marks and ovality.

With the relatively long molding cycle-times of the past it was generally possible to adjust the geometry of the cavity in the holder 50 to address the known defects. For instance, ovality defects may be addressed by adjusting the cavity in the holder 50 to be slightly smaller.

With increasingly aggressive molding cycle-time it is not always possible to address the defects by simple adjustment of the cavity geometry in the holder as adjusting the geometry for one defect may have the effect of making the another defect more prominent.

### SUMMARY

According to a first broad aspect of the present invention, there is provided a method of post-mold cooling of a molded article. The method comprises balancing cooling rates during the post-mold cooling so that the molded article reaches a target exit temperature at a point of time that substantially coincides with a point of time when the molded article is removed from the post-mold cooling. In some implementations, the balancing comprises controlling cooling rates at a first post-mold cooling portion and a second post-mold cooling portion. In other implementations, the balancing comprises balancing cooling rates between portions of the molded article.

According to another broad aspect of the present invention, there is provided a computer-readable product for use with a controller, which comprises a computer readable medium embodying one or more instructions executable by the controller, the one or more instructions including: controller executable instructions for instructing a post-mold device for balancing cooling rates during the post-mold cooling so that the molded article reaches a target exit temperature at a point of time that substantially coincides with a point of time when the molded article is removed from the post-mold cooling.

According to another broad aspect of the present invention, there is provided a molding machine. The molding machine comprises a post-mold device for cooling a portion of a molded article; and a temperature control device for controlling the cooling rate imposed on the portions of the molded article by one or more post-mold devices to effect the balancing of the cooling rates between the portions.

According to another broad aspect of the present invention, there is provided a molding machine. The molding machine comprises a post-mold device for cooling a molded article; and a temperature control device for controlling the cooling rate imposed by the post-mold device.

According to yet another broad aspect of the present invention, there is provided a method for post-mold cooling a molded article. The method comprises balancing cooling rates between portions of the molded article.

### DESCRIPTION OF THE DRAWINGS

A better understanding of the exemplary embodiments of the present invention (including alternatives and/or variations thereof) may be obtained with reference to the detailed description of the exemplary embodiments along with the following drawings, in which:
FIG. 1 is a top elevation view of a known injection molding system;
FIG. 2A is a section view through a post-mold device depicted in the injection molding system of FIG. 1 at a time before the molded article has completely seated therein;
FIG. 2B is a section view through a post-mold device depicted in the injection molding system of FIG. 1 at a time after the molded article has completely seated therein;
FIG. 3 is a top elevation view of an injection molding system in accordance with a non-limiting embodiment of the present invention;
FIG. 4 is a top elevation view of an injection molding system in accordance with another non-limiting embodiment of the present invention.

The drawings are not necessarily to scale and are may be illustrated by phantom lines, diagrammatic representations and fragmentary views. In certain instances, details that are not necessary for an understanding of the exemplary embodiments or that render other details difficult to perceive may have been omitted.

### DETAILED DESCRIPTION OF EMBODIMENTS

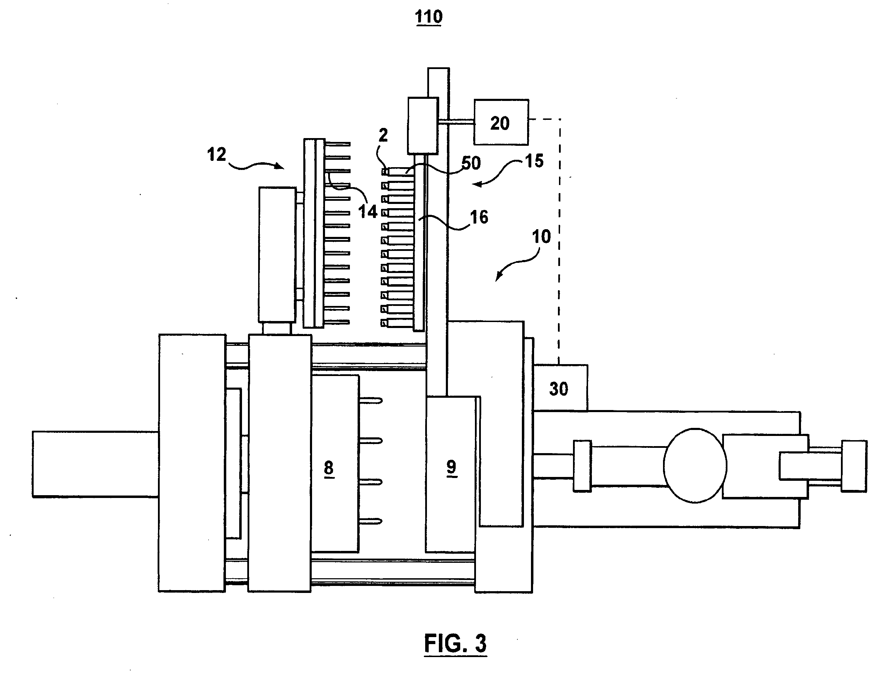

FIG. 3 is an injection molding system 110 in accordance with a non-limiting embodiment of the present invention. The molding system 110 is similar to the known molding system 10 described hereinbefore which included the post-mold devices 12, 15. The molding system 110 further includes a temperature control device 20 for controlling the temperature of the holder 50, on post-mold device 15, to avoid imparting cooling related defects to the molded article 2.

The method in accordance with an embodiment of the present invention includes balancing cooling rates between the portions 2', 2", 2'" of the molded article 2, as shown with reference to FIG. 2B, to substantially reduce post-mold cooling related defects of the molded article.

The balancing of the cooling rates between portions 2', 2", 2'" is preferably controlled such that each of the portions of the molded article 2', 2", 2'" arrive at respective ejection temperatures, that substantially precludes post-ejection defects, at the substantially the same time.

The method preferably includes controlling the cooling rate imposed on one or more of the portions of the molded article 2', 2", 2"' by one or more post-mold devices 12, 13, 15 to effect the balancing of the cooling rates between the portions 2', 2", 2'".

In accordance with an embodiment of the present invention the method includes arranging a first portion of the molded article 2' in a holder 50 of a post-mold device 15 and controlling the temperature of the holder 50 to avoid imparting cooling related defects to the molded article (2).

Preferably, the controlling of the temperature of the holder 50 minimizes a temperature differential in the molded article 2 at a transition between the first portion of the molded article 2' arranged in the holder 50 and a second portion of the molded article 2" that is outside of the holder 50.

Preferably, controlling the temperature of the holder 50 includes controlling the temperature of a coolant media that is circulated for controlling the temperature of the holder 50. The temperature control of the coolant media may be performed by circulating the coolant media through the temperature control device 20.

Alternatively, the controlling the temperature of the holder 50 includes the controlling the flow rate of a coolant that is circulated to control the temperature of the holder 50.

Preferably, controlling the temperature of the holder 50 includes selecting a temperature of the holder 50 whereby the first and second portions of the molded article 2', 2'" are controllably cooled at first and second cooling rates such that the molded article portions 2', 2"' arrive at ejection safe temperatures at substantially the same time.

A technical effect of the embodiment of the present invention is a reduction in the formation of defects in the molded article 2 that are related to post-mold cooling of the molded article.

In accordance with the embodiment of the present invention, the technical effect was prominent when the temperature of the coolant media for cooling of the holder 50 was heated above ambient temperature and below a glass temperature of a resin used to form the molded article 2. More preferably, the temperature of the holder 50 is selected to be between about 35°C and 65°C. More preferably still the temperature of the holder 50 is selected to be about 50°C.

Preferably, the temperature of the holder 50 is homogenous. Alternatively, a subtle gradient along the molded article may be useful to reduce local defects, such as sink marks, while still avoiding ovality defects.

Preferably, the molding machine controller 30 controls the temperature control device 20 for controlling the temperature of the coolant media using closed-loop control. Alternatively, the temperature control may be open-loop control. Alternatively, the temperature control device 20 may include a dedicated controller, not shown, the dedicated controller may be operatively linked or entirely independent from the machine controller 30. Accordingly, the method of controlling the temperature of the coolant media may further include the sending coolant temperature set-points from a molding machine controller 30 to the dedicated controller in the temperature control device 20. In addition, operational feedback from the temperature control device 20 may be shared with the molding machine controller 30.

In accordance with an alternative embodiment of the invention, the cooling rate of one or both or the molded article portions (2", 2"') may be effected similarly by controlling the post-mold devices 13, 15. For example, the coolant flow rate, or coolant temperature may be controlled through the pin 14 and/or dispersion device 19 of post-mold devices 12, 13.

Any type of controller or processor may be used to balance the cooling rates between portions (2', 2", 2"') of the molded article (2), as described above. For example, one or more general-purpose computers, Application Specific Integrated Circuits (ASICs), Digital Signal Processors (DSPs), gate arrays, analog circuits, dedicated digital and/or analog processors, hard-wired circuits, etc., may receive input from the feedback signals described herein. Instructions for controlling the one or more of such controllers or processors may be stored in any desirable computer-readable medium and/or data structure, such floppy diskettes, hard drives, CD-ROMs, RAMs, EEPROMs, magnetic media, optical media, magneto-optical media, etc. An expert system may be implemented in the controller 30 to automatically control the post-mold devices 12, 13, 15 to adjust the cooling rates of the portions (2', 2", 2"') based upon quantitative and/or qualitative feedback on the state of the molded article 2.

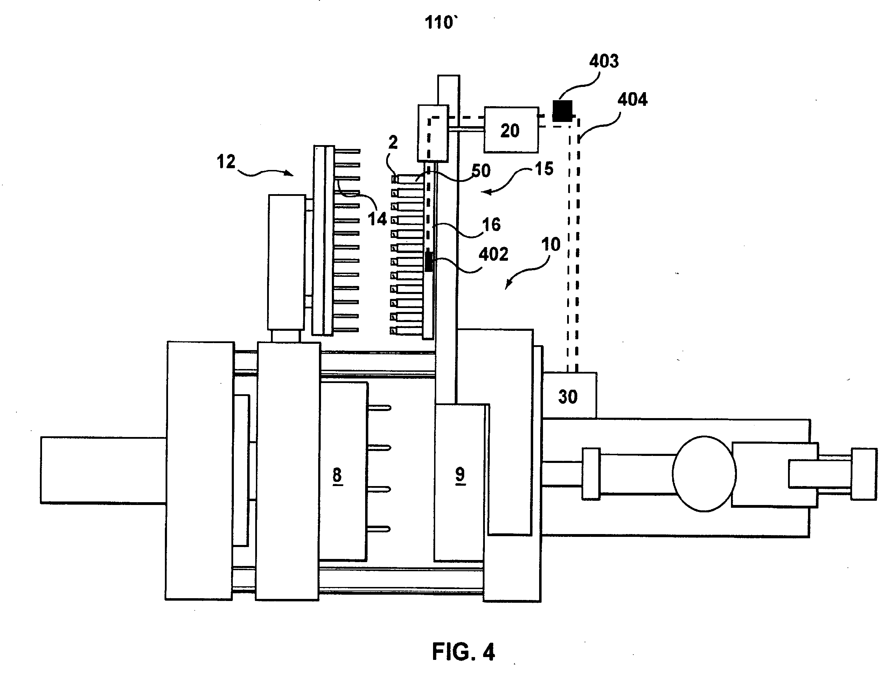

With reference to Figure 4, another non-limiting embodiment of a molding system 110' will now be described in greater detail. The molding system 110' can be substantially similar to the above-described molding system 110, but for the specific differences to be discussed herein below and, as such, like elements are denoted with like numerals. Within these non-limiting embodiments of the present invention, the molding system 110' comprises a sensor 402 associated with the post-mold device 15.

Generally speaking, the purpose of the sensor 402 is to determine temperature associated with operation of the holders 50. It should be expressly understood that in some embodiments of the present invention, the sensor 402 is configured to measure the temperature, however in other embodiments, the sensor 402 can measure another parameter which can then be used to determine a temperature value. Examples of such a proxy value of an operational parameter that can be used include, but are not limited to, pressure exerted by a preform 2 against a wall of the holder 50 and the like. In some embodiments of the present invention, the sensor 402 can be implemented as a thermocouple. In other embodiments of the present invention, the sensor 402 can be implemented as a thermistor. In yet other embodiments of the present invention, the sensor 402 can be implemented as a thermal emission camera (ex. an infrared camera and the like). In yet further non-limiting embodiments, the sensor 402 can be implemented as a pressure measurement device (ex. a pressure transducer and the like). Other alternative implementations are, of course, possible.

In some embodiments of the present invention, the sensor 402 can comprise a single sensor 402 associated with the post-mold device 15. In other embodiments of the present invention, the sensor 402 can comprise a plurality of sensors 402; each of the plurality of sensors 402 being associated with a respective holder 50. In alternative non-limiting embodiments of the present invention, which are particularly applicable in those implementations where the post mold devices 12, 15 are configured to implement a so-called multi-position post-mold cooling function, the sensor 402 can comprise a plurality of sensors 402; each of the plurality of sensors 402 being associated with a selected one of the holders 50 in a given position of the post-mold cooling cycle. In other words, the sensor 402 can comprise a plurality of sensors 402; each of the plurality of sensors associated with a given position of the post-mold cooling function. For example, in a molding system 110' which implements a three-position post-mold cooling function, three instances of the sensors 402 can be used.

The sensor 402 is configured to generate a signal 403 representative of an operational parameter (such as the temperature or the like), associated with operation of the holders 50.

The sensor 402 is coupled to the controller 30 via a communication link 404. In some embodiments of the present invention, the communication link 404 can be implemented as a wired link. As will be appreciated by those of skill in the art, within these embodiments of the present invention, the wired link is configured to withstand operating temperatures associated with the molding system 110'. In other non-limiting embodiments of the present invention, the communication link 404 can be implemented as a wireless link. Those skilled in the art will appreciate that a plethora of possible wireless communication protocols can be used. Examples of wireless communication protocols that can be used include, but are not limited to, Wi-Fi, BlueTooth, Wi-Max and the like. The sensor 402 is operable to transmit the signal 403 to the controller 30 via the communication link 404. Naturally, in alternative non-limiting embodiments of the present invention, the sensor 402 can be coupled to a dedicated controller (not depicted) separate from the controller 30.

How the sensor 402 generates and transmits the signal 403 is not particularly limited. For example, the sensor 402 can sense an operating parameter, generate the signal 403 representative of the sensed operating parameter and to transmit the signal 403 to the controller 30 at regular time intervals. In other non-limiting embodiments of the present invention, the sensor 402 can sense an operating parameter, generate the signal 403 representative of the sensed operating parameter and to transmit the signal 403 to the controller 30 at a beginning of a given position of the post-mold cooling cycle. For example, within a four-position post-mold cooling cycle, the sensor 402 can repeat this routine at a beginning of each of the four-positions of the post-mold cooling cycle.

Alternatively, the sensor 402 can perform a similar routine at a beginning of a first position of a multi-position post-mold cooling cycle. In yet further non-limiting embodiments, the sensor 402 can perform the same routine upon receipt of a request signal (not depicted) from the controller 30.

Given the architecture of Figure 4, it is possible to implement a method for post-mold cooling according to another non-limiting embodiment of the present invention.

At a first instance in time, i.e. at a beginning of a post-mold cooling cycle, a molded article 2 is received within the holder 50 and a first portion of the post-mold cooling cycle begins. Within the first portion of the post-mold cooling cycle, the temperature control device 20 controls the coolant media that is circulated for controlling the temperature of the holder 50 to a first cooling temperature. As a non-limiting example and not as a limitation, the first cooling temperature can be 10C°.

At a second instance in time, i.e. at some point in time after the first instance in time, a second portion of the post-mold cooling cycle commences. Within the second portion of the post-mold cooling cycle, the temperature control device 20 controls the temperature of the coolant media that is circulated for controlling the temperature of the holder 50 to a second cooling temperature, which is greater then the first cooling temperature. As a non-limiting example and not as a limitation, the second cooling temperature can be 65C°.

A point in time when the first post-mold cooling portion ends and the second post-mold cooling portion commences, can be broadly called a switch point. How the switch point is determined is not particularly limited and can be implemented in several possible alternatives.

### Pre-determined point in time

In some embodiments of the present invention, the switch point can be implemented as a pre-determined point in time. For example, an operator operating the molding system 110' can set-up the switch point using, for example, a human-machine interface (not depicted) of the molding system 110'. This switch point can be expressed as a value representative of time elapsed since a beginning of a post-mold cooling cycle (ex. 2 seconds, 3 seconds, 4 seconds, 5 seconds or any other suitable value). Alternatively, this switch point can be expressed as a value representative of number of positions of the post-mold cooling cycle expired after a beginning of the post-mold cooling cycle (ex. a switch point after 1 position is completed, 2 positions are completed, 3 positions are completed, 4 positions are completed, 2.5 positions are completed, 3.2 positions are completed and the like). Alternatively, a combination of the number of positions and elapsed time since the beginning of the last position can be used (ex. 2 positions and 1 second, etc.).

Within these embodiments of the present invention, the switch point can be adjusted from time to time. For example, the operator can change the switch point using, for example, the human-machine interface (not depicted) to move the switch point closer or further way from the beginning of the post mold cooling cycle.

### Temperature value

In alternative non-limiting embodiments of the present invention, the switch point can be implemented as a temperature value associated with operation of the holders 50 (i.e. a target temperature). For example, the switch point can be expressed as a temperature value associated with molded articles 2 being treated in a given position of the post-mold cooling cycle or a holder 50. As an example and not as a limitation, the switch point can be expressed as 65C°. In other words, when the molded article 2 reaches the temperature of 65C°, a switch between the first post-mold cooling portion and the second post-mold cooling portion occurs.

Within these embodiments of the present invention, the controller 30 monitors the signal(s) 403 received from the sensor 402 or the plurality of sensors 402. When a given signal 403 is indicative of a given molded article 2 reaching the target temperature, a determination is made that the switch point has been reached.

In those embodiments of the present invention, where the sensor 402 is implemented as a plurality of sensors 402; each of the plurality of sensors being associated with a given holder 50; the controller 30 receives a plurality of signals 403 from each of the plurality of sensors 402. The controller 30 then individually analyzes each of the plurality of signals 403.

In those embodiments of the present invention, where the sensor 402 is implemented as a plurality of sensors 402; each of the plurality of sensors being associated with a given position of the post-mold cooling function; the controller 30 receives a plurality of signals 403 from each of the plurality of sensors 402. The controller 30 then individually analyzes each of the plurality of signals 403 for a given position of the post-mold cooling cycle. Within these embodiments of the present invention, an assumption is made that molded articles 2 being treated within the same position of the post-mold cooling cycle have substantially the same temperature.

In those embodiments of the present invention, where the sensor 402 is implemented as a single sensor, the controller 30 receives a single signal 403 from the single sensors 402. The controller 30 then analyzes the single signal 403 and performs a calculation routine to determine a respective temperature associated with each position of the multi-position post-mold cooling cycle.

The temperature control of the coolant media may be performed by circulating the coolant media through the temperature control device 20. How the temperature control device 20 controls the coolant media is not particularly limited. In some embodiments of the present invention, the temperature control device 20 can control the coolant media by heating and/or cooling the coolant media. In alternative non-limiting embodiments, the temperature control device 20 can control the coolant media by controlling a rate of flow of the coolant media. In yet further non-limiting embodiments of the present invention, the temperature control device 20 can control the coolant media by shutting off supply of the coolant media at the second post-mold cooling portion. Other alternatives are, of course, also possible. Yet in further non-limiting embodiments of the present invention, the temperature control device 20 can control the coolant media by changing the coolant media from a first type of coolant media to a second type of coolant media. Other alternatives are, of course, also possible.

Accordingly, it should now become apparent that the method of controlling post-mold cooling broadly includes steps of balancing cooling rates during a post-mold cooling function. More specifically, the balancing of cooling rates may include balancing of cooling rates among various portions 2', 2", 2'" of the molded article 2. Balancing of cooling rates may be further implemented using two methods of various embodiments of the present invention:
(a) increasing the initial cooling rate (for example, by increasing the cooling temperature) to ensure that the various portions 2', 2", 2'" of the molded article 2 reach a target exit temperature at substantially the same time. In some embodiments of the present invention, this substantially same time substantially coincide with an instance of time when the molded article 2 is ready for ejection from the post-mod device 15. In other words, the balancing may include controlling an initial cooling rate to decrease a temperature differential between a just-molded article 2 and cooling media
(b) Initially cooling the molded article 2 at a first temperature, then at a switch point commencing cooling at a second temperature; to ensure that the various portions 2', 2", 2'" of the molded article 2 reach the target exit temperature at substantially the same time. In some embodiments of the present invention, this substantially same time substantially coincide with an instance of time when the molded article 2 is ready for ejection from the post-mod device 15.

Accordingly, a technical effect of some embodiments of the present invention leads to reduced slow-cooling induced defects (ex. crystallinity, ovality, etc.). Another technical effect of the embodiments of the present invention is that the molded article 2 reaches a target exit temperature at a point of time that substantially coincides with a point in time when the molded article 2 is removed from the post-mold device 15.

The description of the embodiments provides examples of the present invention, and these examples do not limit the scope of the present invention. For example, balancing of cooling rates will be specific to both molded article (e.g. preform) design and molding cycle time. It is understood that the scope of the present invention is limited by the claims. The concepts described above may be adapted for specific conditions and/or functions, and may be further extended to a variety of other applications that are within the scope of the present invention. Having thus described the exemplary embodiments, it will be apparent that modifications and enhancements are possible without departing from the concepts as described. Therefore, what is to be protected by way of letters patent are limited only by the scope of the following claims:

## Claims

1. A method of post-mold cooling of a molded article (2), the molded article having just been molded within mold halves (8, 9), the method comprising:
receiving, in a post-mold device (15), the molded article (2) ;
subjecting the molded article (2) to post-mold cooling, the post-mold cooling including:
balancing cooling rates during the post-mold cooling of the molded article (2) so that the molded article (2) reaches a target exit temperature, which substantially precludes post-ejection defects, at a point of time that substantially coincides with removal of the molded article (2) from post-mold cooling, wherein said balancing comprises controlling cooling rates at a first post-mold cooling portion and a second post-mold cooling portion and/or balancing cooling rates between portions (2', 2", 2"') of the molded article (2).

2. The method in accordance with claim 1, wherein said controlling comprises:
implementing the first post-mold cooling portion at a first temperature; and
implementing the second post-mold cooling portion at a second temperature, said second post-mold cooling temperature being greater then said first post-mold cooling temperature.

3. The method in accordance with claim 1, wherein said balancing comprises controlling an initial cooling rate to decrease a temperature differential between a just-molded article (2) and cooling media.

4. The method in accordance with claim 1, wherein:
the balancing of the cooling rates between portions (2', 2", 2"') is controlled such that each of the portions of the molded article (2', 2", 2"') arrive at respective ejection temperatures, that substantially precludes post-ejection defects, at substantially the same time.

5. The method in accordance with claims 1, further comprising:
controlling the cooling rate imposed an one or more of the portions of the molded article (2', 2", 2"') by one or more post-mold devices (12, 13, 15) to effect the balancing of the cooling rates between the portions (2', 2", 2"').

6. The method in accordance with claim 5, further comprising:
arranging a first portion of the molded article (2') in a holder (50) of a post-mold device (15);
controlling the temperature of the holder (50) to avoid imparting cooling related defects to the molded article (2).

7. The method in accordance with claim 6, further comprising:
controlling the temperature of the holder (50) to minimize a temperature differential in the molded article (2) at a transition between the first portion of the molded article (2') arranged in the holder (50) and a second portion of the molded article (2") that is outside of the holder (50).

8. The method in accordance with claim 6, wherein:
the controlling of the temperature of the holder (50) includes controlling the temperature of a coolant media that is circulated for controlling the temperature of the holder (50).

9. The method in accordance with claim 6, wherein:
the controlling of the temperature of the holder (50) includes the controlling of the flow rate of a coolant that is circulated to control the temperature of the holder (50).

10. The method in accordance with claim 7, wherein:
the controlling of the temperature of the holder (50) includes selecting a temperature of the holder (50) whereby the first and second portions of the molded article (2', 2") are controllably cooled at first and second cooling rates such that the molded article portions (2', 2"') arrive at ejection safe temperatures at substantially the same time.

11. The method in accordance with claim 6, wherein:
the temperature of the holder (50) is controlled to have a thermal gradient along at least a portion of its length.

12. A computer-readable product for use with a controller (30) comprising:
a computer readable medium embodying one or more instructions executable by the controller (30), the one or more instructions including:
controller executable instructions for instructing a post-mold device (12, 13, 15) for (i) receiving a molded article (2), the molded article (2) having been just molded within the mold halves (8, 9); and (ii) subjecting the molded article (2) to post-mold cooling by balancing cooling rates during the post-mold cooling of the molded article (2) so that the molded article (2) reaches a target exit temperature, which substantially precludes post-ejection defects, at a point of time that substantially coincides with removal of the molded article (2) from post-mold cooling, wherein said balancing comprises controlling cooling rates at a first post-mold cooling portion and a second post-mold cooling portion and/or balancing cooling rates between portions (2', 2", 2"') of the molded article (2).

13. The computer-readable product in accordance with claim 12, wherein said controlling comprises:
implementing the first post-mold cooling portion at a first temperature; and
implementing the second post-mold cooling portion at a second temperature, said second post-mold cooling temperature being greater then said first post-mold cooling temperature.

## Patentansprüche

1. Verfahren zum Kühlen eines geformten Gegenstands (2) nach dem Formen, wobei der geformte Gegenstand kurz vorher innerhalb von zwei Formhälften (8, 9) geformt wurde, das Verfahren umfassend:
Aufnehmen des geformten Gegenstands (2) in einer Nachformvorrichtung;
Unterziehen des geformten Gegenstands (2) eines Kühlens nach dem Formen, beinhaltend:
derartiges Ausgleichen der Kühlraten des Kühlens nach dem Formen des geformten Gegenstands (2), dass der geformte Gegenstand (2) eine Zielaustrittstemperatur, die Nachauswurfdefekte im Wesentlichen ausschließt, zu einem Zeitpunkt erreicht, der mit der Entfernung des geformten Gegenstands (2) aus der Kühlung nach dem Formen im Wesentlichen zusammenfällt, wobei das Ausgleichen das Steuern von Kühlraten an einem ersten Nachformkühlabschnitt und einem zweiten Nachformkühlabschnitt und/oder das Ausgleichen von Kühlraten zwischen Abschnitten (2', 2", 2"') des geformten Gegenstands (2) umfasst.

2. Verfahren nach Anspruch 1, wobei das Steuern folgendes umfasst:
Implementieren des ersten Nachformkühlabschnitts auf einer ersten Temperatur; und
Implementieren des zweiten Nachformkühlabschnitts auf einer zweiten Temperatur, wobei die zweite Nachformkühltemperatur höher als die erste Nachformtemperatur ist.

3. Verfahren nach Anspruch 1, wobei das Ausgleichen das Steuern einer anfänglichen Kühlrate zum Absenken eines Temperaturunterschieds zwischen einem kurz vorher geformten Gegenstand (2) und Kühlmedien umfasst.

4. Verfahren nach Anspruch 1, wobei:
das Ausgleichen der Kühlraten zwischen Abschnitten (2', 2", 2"') derart gesteuert wird, dass jeder der Abschnitte des geformten Gegenstands (2', 2", 2"') jeweilige Auswurftemperaturen, die Nachauswurfdefekte im Wesentlichen ausschließen, im Wesentlichen zur selben Zeit erreicht.

5. Verfahren nach Anspruch 1, ferner umfassend:
Steuern der Kühlrate, der einer oder mehr der Abschnitte des geformten Gegenstands (2', 2", 2"') durch eine oder mehr Nachformvorrichtungen (12, 13, 15) unterzogen werden, zum Ausführen des Ausgleichens der Kühlraten zwischen den Abschnitten (2', 2", 2"').

6. Verfahren nach Anspruch 5, ferner umfassend:
Anordnen eines ersten Abschnitts des geformten Gegenstands (2') in einem Halter (50) einer Nachformvorrichtung (15);
Steuern der Temperatur des Halters (50) zum Verhindern des Mitteilens von Kühlung bezüglich Defekten des geformten Gegenstands (2).

7. Verfahren nach Anspruch 6, ferner umfassend:
Steuern der Temperatur des Halters (50) zum Minimieren einer Temperaturdifferenz im geformten Gegenstand (2) an einem Übergang zwischen dem ersten Abschnitt des geformten Gegenstands (2'), der im Halter (50) angeordnet ist, und einem zweiten Abschnitt des geformten Gegenstands (2"), der sich außerhalb des Halters (50) befindet.

8. Verfahren nach Anspruch 6, wobei:
das Steuern der Temperatur des Halters (50) das Steuern der Temperatur eines Kühlmediums beinhaltet, das zum Steuern der Temperatur des Halters (59) umgewälzt wird.

9. Verfahren nach Anspruch 6, wobei:
das Steuern der Temperatur des Halters (50) das Steuern der Fließgeschwindigkeit eines Kühlmittels, das zum Steuern der Temperatur des Halters (50) umgewälzt wird, beinhaltet.

10. Verfahren nach Anspruch 7, wobei:
das Steuern der Temperatur des Halters (50) das Auswählen einer Temperatur des Halters (50) beinhaltet, wodurch der erste und zweite Abschnitt des geformten Gegenstands (2', 2") derart auf einer ersten und zweiten Kühlrate steuerbar gekühlt werden, dass die Abschnitte (2', 2"') des geformten Gegenstands im Wesentlichen zur selben Zeit die auswurfsicheren Temperaturen erreichen.

11. Verfahren nach Anspruch 6, wobei:
die Temperatur des Halters (50) zum Aufweisen eines Temperaturgradienten entlang zumindest eines Abschnitts seiner Länge gesteuert wird.

12. Maschinenlesbares Produkt zum Gebrauch mit einer Steuerung (30), umfassend:
ein maschinenlesbares Medium, das eine oder mehr Anweisungen, die durch die Steuerung (30) ausführbar sind, verkörpert, die eine oder mehr Anweisungen enthaltend:
durch die Steuerung ausführbare Anweisungen zum Anweisen einer Nachformvorrichtung (12, 13, 15) zum (i) Aufnehmen eines geformten Gegenstands (2), der kurz vorher innerhalb der Formhälften (8, 9) geformt wurde; und (ii) Unterziehen des geformten Gegenstands (2) eines Kühlens nach dem Formen durch derartiges Ausgleichen von Kühlraten während des Kühlens nach dem Formen des geformten Gegenstands (2), dass der geformte Gegenstand (2) eine Zielaustrittstemperatur, die Nachauswurfdefekte im Wesentlichen ausschließt, zu einem Zeitpunkt erreicht, der mit der Entfernung des geformten Gegenstands (2) aus der Kühlung nach dem Formen im Wesentlichen zusammenfällt, wobei das Ausgleichen das Steuern von Kühlraten an einem ersten Nachformkühlabschnitt und einem zweiten Nachformkühlabschnitt und/oder das Ausgleichen von Kühlraten zwischen Abschnitten (2', 2", 2"') des geformten Gegenstands (2) umfasst.

13. Maschinenlesbares Produkt nach Anspruch 12, wobei das Steuern folgendes umfasst:
Implementieren des ersten Nachformkühlabschnitts auf einer ersten Temperatur; und
Implementieren des zweiten Nachformkühlabschnitts auf einer zweiten Temperatur, wobei die zweite Nachformkühltemperatur höher als die erste Nachformtemperatur ist.

## Revendications

1. Procédé de refroidissement post-moulage d'un article moulé (2), l'article moulé vient d'être moulé à l'intérieur de demi-moules (8, 9), le procédé comprenant le fait :
de recevoir, dans un dispositif de post-moulage (15), l'article moulé (2) ;
de soumettre l'article moulé (2) à un refroidissement post-moulage, le refroidissement post-moulage comportant le fait :
d'équilibrer des vitesses de refroidissement au cours du refroidissement post-moulage de l'article moulé (2) de sorte que l'article moulé (2) atteigne une température de sortie cible, qui exclut essentiellement des défauts post-éjection, à un moment qui coïncide essentiellement avec le retrait de l'article moulé (2) du refroidissement post-moulage, dans lequel ledit équilibrage comprend la régulation des vitesses de refroidissement à une première partie de refroidissement post-moulage et à une deuxième partie de refroidissement post-moulage et/ou l'équilibrage des vitesses de refroidissement entre des parties (2', 2", 2"') de l'article moulé (2).

2. Procédé selon la revendication 1, dans lequel ladite régulation comprend le fait :
de mettre en oeuvre la première partie de refroidissement post-moulage à une première température ; et
de mettre en oeuvre la deuxième partie de refroidissement post-moulage à une deuxième température, ladite deuxième température de refroidissement post-moulage étant supérieure à ladite première température de refroidissement post-moulage.

3. Procédé selon la revendication 1, dans lequel ledit équilibrage comprend la régulation d'une vitesse de refroidissement initiale pour diminuer une température différentielle entre un article qui vient d'être moulé (2) et un agent de refroidissement.

4. Procédé selon la revendication 1, dans lequel :
l'équilibrage des vitesses de refroidissement entre des parties (2', 2", 2"') est régulé de sorte que chacune des parties de l'article moulé (2', 2", 2"') arrive à des températures d'éjection respectives, qui excluent essentiellement des défauts post-éjection, essentiellement en même temps.

5. Procédé selon la revendication 1, comprenant en outre le fait :
de réguler la vitesse de refroidissement imposée à l'une ou à plusieurs des parties de l'article moulé (2', 2", 2"') par un ou plusieurs dispositif (s) de post-moulage (12, 13, 15) pour effectuer l'équilibrage des vitesses de refroidissement entre les parties (2', 2", 2"').

6. Procédé selon la revendication 5, comprenant en outre le fait :
d'agencer une première partie de l'article moulé (2') dans un support (50) d'un dispositif de post-moulage (15) ;
de réguler la température du support (50) afin d'éviter la transmission de défauts relatifs au refroidissement à l'article moulé (2).

7. Procédé selon la revendication 6, comprenant en outre le fait :
de réguler la température du support (50) afin de minimiser une température différentielle dans l'article moulé (2) à une transition entre la première partie de l'article moulé (2') agencée dans le support (50) et une deuxième partie de l'article moulé (2") qui est à l'extérieur du support (50).

8. Procédé selon la revendication 6, dans lequel :
la régulation de la température du support (50) comporte la régulation de la température d'un agent de refroidissement qui circule pour la régulation de la température du support (50).

9. Procédé selon la revendication 6, dans lequel :
la régulation de la température du support (50) comporte la régulation du débit d'un fluide de refroidissement qui circule pour la régulation de la température du support (50).

10. Procédé selon la revendication 7, dans lequel :
la régulation de la température du support (50) comporte la sélection d'une température du support (50) par laquelle les première et deuxième parties de l'article moulé (2', 2") sont refroidies de manière contrôlée à des première et deuxième vitesses de refroidissement de sorte que les parties d'article moulé (2', 2"') arrivent à de bonnes températures d'éjection essentiellement en même temps.

11. Procédé selon la revendication 6, dans lequel :
la température du support (50) est régulée pour avoir un gradient thermique le long d'au moins une partie de sa longueur.

12. Produit lisible par ordinateur pour une utilisation avec une unité de commande (30) comprenant :
un support lisible par ordinateur représentant une ou plusieurs instruction (s) pouvant être exécutée (s) par l'unité de commande (30), la ou les plusieurs instruction(s) comportant :
des instructions pouvant être exécutées par l'unité de commande pour donner une instruction à un dispositif de post-moulage (12, 13, 15) (i) pour recevoir un article moulé (2), l'article moulé (2) vient d'être moulé à l'intérieur des demi-moules (8, 9) ; et (ii) pour soumettre l'article moulé (2) à un refroidissement post-moulage par équilibrage des vitesses de refroidissement au cours du refroidissement post-moulage de l'article moulé (2) de sorte que l'article moulé (2) atteigne une température de sortie cible, qui exclut essentiellement des défauts post-éjection, à un moment qui coïncide essentiellement avec le retrait de l'article moulé (2) du refroidissement post-moulage, dans lequel ledit équilibrage comprend la régulation des vitesses de refroidissement à une première partie de refroidissement post-moulage et à une deuxième partie de refroidissement post-moulage et/ou l'équilibrage des vitesses de refroidissement entre des parties (2', 2", 2"') de l'article moulé (2).

13. Produit lisible par ordinateur selon la revendication 12, dans lequel ladite régulation comprend le fait :
de mettre en oeuvre la première partie de refroidissement post-moulage à une première température ; et
de mettre en oeuvre la deuxième partie de refroidissement post-moulage à une deuxième température, ladite deuxième température de refroidissement post-moulage étant supérieure à ladite première température de refroidissement post-moulage.
